Europäisches Patentamt

European Patent Office

Office européen des brevets

(19)

(11) Publication number: **0 020 826**
**B1**

(12) **EUROPEAN PATENT SPECIFICATION**

(45) Date of publication of patent specification: **20.07.83**

(21) Application number: **79301148.7**

(22) Date of filing: **14.06.79**

(51) Int. Cl.³: **C 22 B 11/04,**
**C 01 B 19/00, C 22 B 3/00**

(54) A hydrometallurgical process for recovering precious metals from anode slime.

(43) Date of publication of application:
**07.01.81 Bulletin 81/1**

(45) Publication of the grant of the patent:
**20.07.83 Bulletin 83/29**

(84) Designated Contracting States:
**BE DE FR GB NL**

(56) References cited:
**FR - A - 1 309 557**
**US - A - 2 111 112**
**US - A - 3 387 928**
**US - A - 3 658 510**

**CHEMICAL ABSTRACTS, vol. 91, no. 2, 9th
July 1979, page 414, no. 11367e Columbus,
Ohio, U.S.A.
CHEMICAL ABSTRACTS, vol. 78, no. 4, 29th
January 1973, page 197, no. 19131a
Columbus, Ohio, U.S.A. T. KH. TSEREKOV et
al.: "Behavior of impurities during the
extraction of tellurium by tributyl phosphate"**

(73) Proprietor: **INSTITUTE OF NUCLEAR ENERGY
RESEARCH
Lung-Tan
Tao Yuan (TW)**

(72) Inventor: **Wang, Wei-Ko
P.O. Box 3-7
Lung Tan (TW)**
Inventor: **Hoh, Ying-Chu
P.O. Box 3-7
Lung-Tan (TW)**
Inventor: **Chuang, Wen-Shou
P.O. Box 3-7
Lung-Tan (TW)**
Inventor: **Shaw, I-Sine
P.O. Box 3-7
Lung-Tan (TW)**

(74) Representative: **Godwin, Edgar James et al,
MARKS & CLERK 57-60 Lincoln's Inn Fields
London, W.C.2A 3LS (GB)**

# A hydrometallurgical process for recovering precious metals from anode slime

This invention relates to a process for recovering the precious metals gold, silver, selenium and tellurium, from anode slime.

In the last three decades, pyrometallurgical processes have been used to recover gold, silver, copper, and selenium from anode slime. The conventional process involves numerous, and often complex, hydro- and pyrometallurgical operations. The first step is to remove copper. Copper present in the slimes occurs usually as metallic copper dislodged from the anodes, together with copper sulphide, selenides, and tellurides. Copper removal is accomplished by carrying out oxidizing roast (at 260—430°C) followed by sulphuric acid leaching. The copper sulphate solutions obtained by these methods are usually contaminated with selenium and silver, which must be removed before the copper is recovered by electro-winning, cementation, or crystallisation as copper sulphate.

Selenium is present in the slimes in the elementary form as well as metallic selenides. It is generally recovered by smelting the decopperized anode slimes with soda or soda nitre and dissolving the resulting water-soluble sodium selenite from the crushed slag. Elementary selenium is precipitated by passing sulphur dioxide through the acidic leached solution. Both of the above recovered selenium products should be purified by re-dissolution, re-precipitation, and final distillation to obtain a marketable product.

The decopperized anode slimes, containing varying amounts of selenium, are smelted in a Doré furnace. The resulting Doré metal is a gold-silver-copper alloy containing approximately 80% silver. This metal is processed electrolytically using the Moebius system to refine silver and separate gold and platinoids. The Moebius cell cathodes receive a deposit of silver crystals with "three nines" quality or better. The gold and platinoids, together with some silver, are collected as an anode sludge in a fabric bag. This sludge may be treated by boiling with sulphuric acid to remove the silver and impurities, and high purity gold may then be recovered from the residue by refining in Wholwill cells.

The above-described conventional pyrometallurgical process to recover the precious metals is getting harder and harder to operate because energy costs have soared, strict pollution laws have been enacted, and high grade ore has been depleted.

In order to cope with soaring energy costs, to comply with strict pollution laws, and to face up to the depletion of high grade ore, a hydrometallurgical process to recover the precious metals has been developed and tested successfully by us. The process is economic, energy-saving, and practically pollution-free. The hydrometallurgical process consists of (1) a leaching step, where the precious metals are introduced to the aqueous environment, (2) a solvent extraction step, where the metals are separated and purified, and (3) a reduction step, where the metallic ions are reduced and precipitated from solution. Owing to the lower energy consumption: $151 \times 10^6$ Btu ($151 \times 10^9$ J) of energy consumed per ton of gold recovered (calculated for the new process) against $59,000 \times 10^6$ Btu ($62,000 \times 10^9$ J) of energy consumed per ton of gold recovered from the conventional process (H. H. Kellogg, 'Sizing up the requirements for producing primary materials', *Engineering and Mining Journal*, April 1977, pp. 61—65), the hydrometallurgical process makes itself much more economical and attractive.

Accordingly, the present invention provides a process for separating and recovering gold, silver, selenium, and tellurium from decopperised anode slime, comprising the steps of leaching decopperised anode slime with nitric acid, precipitating silver as silver chloride, and recovering selenium and tellurium by reduction with sulphur dioxide, the process being characterised in that:

(A) the selenium and tellurium containing solution obtained after the separation of silver chloride is subjected to the following steps:

(a) denitration and chlorination of the selenium and tellurium containing solution by liquid-liquid extraction;

(b) separation of tellurium from the denitrated and chlorinated solution by liquid-liquid extraction;

(c) precipitating selenium by introducing sulphur dioxide into the selenium-containing aqueous solution from step (b); and

(d) precipitating tellurium by introducing sulphur dioxide into the tellurium-containing stripping solution from step (b); and

(B) the residue obtained from the nitric acid leaching of the anode slime is subjected to the following steps:

(e) leaching of the said residue by means of aqua regia;

(f) separation of gold from the aqua regia leach solution by liquid-liquid extraction; and

(g) reduction of gold from the organic medium from step (f) by adding an appropriate amount of a reducing agent.

Preferably, step (a) comprises at least six extraction stages and six stripping stages, and step (b) comprises at least two extraction stages, two scrubbing stages, and two stripping stages. Preferably, at least the first two extraction stages of step (a) are used for denitration and the remaining extraction stages are used for simultaneous denitration and chlorination. Step (f) preferably comprises at least one extraction stage and two scrubbing stages. The scrubbing solution preferably being at least 3M hydrochloric acid.

In the preferred process, all of the organic media and most of the mineral acids are recycled and reused.

The hydrometallurgical procedures outlined above have the following advantages over the pyrometallurgical art.

(1) The highest operating temperature in the hydrometallurgical and pyrometallurgical processes are 80°C and 1300°C respectively. Therefore, the energy consumption for the present hydrometallurgical process is much lower than for the pyrometallurgical art.

(2) The treatment of the wastes from the present process is much easier from the pyrometallurgical art.

(3) The recovery rate of selenium for the present process is greater than 94%, whereas for the pyrometallurgical art it seldom exceeds 80%.

(4) In the present process, gold and silver can be recovered directly without going through a gold-silver alloy.

(5) The liquid-liquid extraction technique is suitable for recovering metals from low content of mother liquor. This technique is easy to operate and is also suitable for continuous operation.

(6) In the present process all of the organic media and most of the mineral acids can be recycled and reused, along with the low energy consumptions, making the process economical and attractive.

In the accompanying drawings, the sole figure is a flow sheet of a hydrometallurgical process according to the present invention.

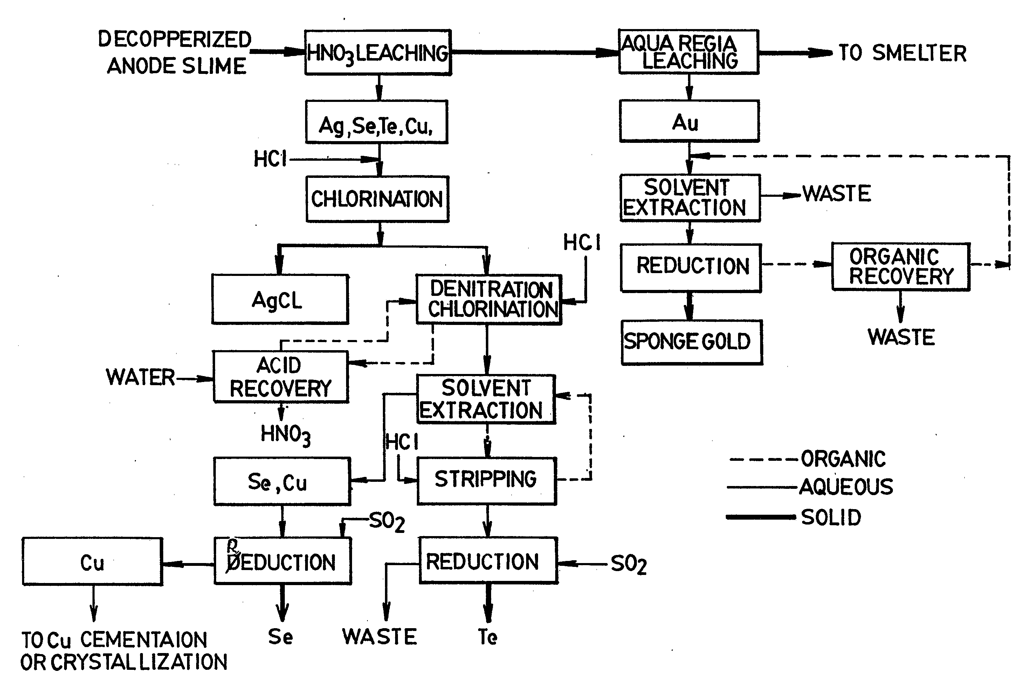

To more fully illustrate the process of the invention, the following Example is presented, it being understood, however, that the example is given by way of illustration and not by way of limitation. The Example corresponds to the flow sheet of Figure 2.

Example

Decopperized anode slime leaching was carried out experimentally in a flask equipped with an agitator, a condenser, heating apparatus, and a temperature indicator and controller. 1500 g of decopperized anode slime containing 283.8 g of silver, 222.3 g of selenium, and 13.95 g of tellurium, together with a minium amount of nitric acid, was placed in the previously mentioned flask and heated for 2 hours at a temperature of 80°C. The mixture was then filtered and the residue was sent to an aqua regia leaching step (see below) for the recovery of gold. The filtered solution was found to contain 272.4 g of silver, 215.6 g of selenium, and 10.6 g of tellurium, together with the other impurities; this is equivalent to a 96.1%, 97%, and 76% leaching rate for silver, selenium, and tellurium respectively. To the filtered solution, a minimum amount of hydrochloric acid was added and the resulting precipitated silver chloride was filtered, washed, and dried to give a purity of 99.2% white silver chloride. Impurities such as lead and tellurium are less than 0.017% and 0.001%.

After recovering silver chloride, the filtered solution was sent to denitration and chlorination (simultaneous) using a liquid-liquid extraction technique. The experiment was carried out in a six-stage mixer-settler (in practice more than six stages may be used). The filtered solution with a nitrate ion level of 5.7 M after removal of silver chloride was fed to the first stage at a rate of 5.0 parts per minute and hydrochloric acid was fed to the third or the fourth stage at a rate of 1.67 parts per minute. An organic extractant was prepared containing about 30 parts by volume of kerosene and 70 parts by volume of tri-n-butyl phosphate. This organic extractant was fed to the sixth stage of the mixer-settler at a rate of 12.7 parts per minute. The system, as described above, was operated for about 16 hours at the beforementioned flow rates. Samples were collected for every other 10 minutes in the first hour, 20 minutes in the second hour, and 30 minutes in the rest of the operating period. The aqueous raffinate containing most of the metal ions left the sixth stage at a nitrate and chloride ion level of 0.1 M and 2.15 M respectively. This aqueous solution was concentrated to 4.7 M in chloride ion level by vacuum evaporation and was sent to a selenium and tellurium separation step (see below). The nitrate ion loaded organic medium leaving the first extraction stage at a rate of 12.7 parts per minute was fed to the first of six stripping stages for recovering nitric acid. Water was used as the stripping agent at a rate of 8.5 parts per minute and was fed to the sixth stripping stage. The recovered nitric acid with a nitrate ion level of 2.5 M was sent for concentration and recyling to the anode slime leaching step. The stripped organic extractant was recycled to the denitration and chlorination step.

After denitration, chlorination, and evaporation, the solution at a chloride ion level of 4.7 M was fed to the second of two selenium-tellurium separation (solvent extraction) stages at a rate of 3 parts per minute. This operation was carried out in a six-stage mixer-settler having two extraction stages, two scrubbing stages, and two stripping stages. An organic extractant was prepared containing 30 parts by volume of tri-n-butyl phosphate and 70 parts by volume of kerosene. The organic extractant was fed to the first selenium-tellurium separation stage at a rate of 4.5 parts per minute. 5 M hydrochloric acid was fed to the second scrubbing stage at a rate of 0.9 parts per minute as the scrubbing agent and 0.5 M hydrochloric acid was fed to the second stripping stage at the rate of 0.9 parts per minute as the stripping agent. 69 g/l selenium-containing solution with 4.5 M in chloride ion level left the first extraction stage. This selenium-containing solution was concentrated to 7.0 M in chloride ion level, and sulphur dioxide was then passed through this concentrated selenium-containing solution to reduce selenium. Red brick selenium was precipitated out. After filtration, washing, and drying, 210 g of dark grey selenium with purity greater than 99.5% were obtained. This is equal to a 94.4% recovery rate for selenium. (The residue from selenium reduction can be subjected to copper cementation or crystallization). 14.1 g/l of tellurium-containing solution with 1.67 M in chloride ion level left the first stripping stage. Sulphur dioxide was passed through this tellurium-containing solution to reduce tellurium. After filtration, washing, and drying, 9.9 g of high purity dark grey tellurium were obtained. This indicates a 71% recovery rate for tellurium. The stripped organic extractant leaving the second stripping stage was recycled to the first extraction stage.

Aqua regia leaching was conducted in the same apparatus as the decopperized anode slime leaching step. 1500 grams of the residue, containing 37.395 g of gold, from the decopperized anode slime leaching step together with a minimum amount of aqua regia were charged into the leaching apparatus. This system was maintained at 80°C for 4 hours. The mixture was then filtered, and the residue, containing 0.0162% of gold, 1.51% of silver, and 26% of lead was recycled to the copper smelter.

The filtered solution with a gold concentration of 6.566 g/l was fed to the second of two extraction stages at a rate of 2.92 parts per minute for recovering gold. This experiment was carried out in a five-stage mixer-settler having two extraction stages and three scrubbing stages. Diethylene glycol dibutyl ether was used as an orgnaic extractant. This organic extractant was fed to the first extraction stage at a rate of 0.97 parts per minute. 3 M hydrochloric acid solution was used as the scrubbing agent and was fed to the third scrubbing stage at a rate of 0.97 parts per minute. The raffinate containing 2 ppm of gold left the first extraction stage at a rate of 3.89 parts per minute. The gold-loaded organic extractant left the third scrubbing stage at a rate of 0.97 parts per minute. This gold-loaded organic extractant was charged into a flask containing a minimum amount of oxalic acid solution and was kept at 80°C with occasional stirring to ensure complete reduction of gold to the metallic state (sponge gold). The metal was filtered and was washed successively with hydrochloric acid, water, and methanol. Finally, the gold was ignited to constant weight. 99.46 per cent primary recovery rate could be obtained by using this process. The organic extractant from which the gold had been reduced was recovered and reused.

## Claims

1. A process for separating and recovering gold, silver, selenium, and tellurium from decopperised anode slime, comprising the steps of leaching decopperised anode slime with nitric acid, precipitating silver as silver chloride, and recovering selenium and tellurium by reduction with sulphur dioxide, the process being characterised in that:

(A) the selenium and tellurium containing solution obtained after the separation of silver chloride is subjected to the following steps:

(a) denitration and chlorination of the selenium and tellurium containing solution by liquid-liquid extraction;

(b) separation of tellurium from the denitrated and chlorinated solution by liquid-liquid extraction;

(c) precipitating selenium by introducing sulphur dioxide into the selenium-containing aqueous solution from step (b); and

(d) precipitating tellurium by introducing sulphur dioxide into the tellurium-containing stripping solution from step (b); and

(B) the residue obtained from the nitric acid leaching of the anode slime is subjected to the following steps;

(e) leaching of the said residue by means of aqua regia;

(f) separation of gold from the aqua regia leach solution by liquid-liquid extraction; and

(g) reduction of gold from the organic medium from step (f) by adding an appropriate amount of a reducing agent.

2. A process as claimed in Claim 1, in which step (a) comprises at least six extraction stages and six stripping stages, and step (b) comprises at least two extraction stages, two scrubbing stages, and two stripping stages.

3. A process as claimed in Claim 2, in which at least the first two extraction stages of step (a) are used for denitration and the remaining stages are used for simultaneous denitration and chlorination.

4. A process as claimed in any of Claims 1 to 3, in which step (f) comprises at least one extraction stage and two scrubbing stages.

5. A process as claimed in Claim 4, in which the scrubbing solution is at least 3M hydrochloric acid.

## Revendications

1. Procédé pour séparer et récupérer de l'or de l'argent, du sélénium et du tellure à partir de boues anodiques décuivrées comportant les étapes de lixiviation de la boue anodique décuivrée avec de l'acide nitrique, de précipitation de l'argent sous forme de chlorure d'argent, et de récupération de sélénium et du tellure par réduction avec le dioxyde de soufre, ce procédé étant caractérisé en ce que:

A) La solution contenant du sélénium et du tellure obtenue après la séparation du chlorure d'argent est oumise aux étapes suivantes:.

a) dénitration et chloruration de la solution contenant du sélénium et du tellure par extraction liquide-liquide,
b) séparation du tellure à partir de la solution dénitrée et chlorurée par extraction liquide-liquide;
c) précipitation du sélénium en introduisant du dioxyde de soufre dans la solution aqueuse contenant du sélénium et provenant de l'étape (b);
d) précipitation du tellure en introduisant du dioxyde de soufre dans la solution de séparation contenant du tellure et provenant de l'étape (b); et

B) Le résidu obtenu à partir de la lixiviation à l'acide nitrique de la boue anodique est soumis aux étapes suivantes:

e) lixiviation dudit résidu au moyen d'eau régale;
f) séparation de l'or à partir de la solution de lixiviation à l'eau régale par extraction liquide-liquide; et
g) réduction de l'or à partir de l'agent organique provenant de l'étape (f) en ajoutant une quantité appropriée d'un agent réducteur.

2. Procédé tel que revendiqué dans la revendication 1, dans lequel l'étape (a) comprend au moins six étages d'extraction et six étages de séparation, et l'étape (b) comprend au moins deux étages d'extraction, deux étages de lavage et deux étages de séparation.

3. Procédé tel que revendiqué dans la revendication 2, dans lequel au moins les deux premiers étages d'extraction de l'étape (a) sont utilisés pour la dénitration et les étages restants sont utilisés pour la dénitration et la chloruration simultanées.

4. Procédé tel que revendiqué dans l'une quelconque des revendications 1 à 3, dans lequel l'étape (f) comprend au moins un étage d'extraction et deux étages de lavage.

5. Procédé tel que revendiqué dans la revendication 4, dans lequel la solution de lavage est de l'acide chlorhydrique au moins 3M.

**Patentansprüche**

1. Verfahren zum Abtrennen und Rückgewinnin von Gold, Silber, Selen und Tellur aus entkupfertem Anodenschlamm, bei dem die Schritte der Auslaugung des entkupferten Anodenschlammes mit Salpetersäure, der Ausfällung von Silber als Silberchlorid und die Rückgewinnung von Seln und Tellur durch Reduktion mit Schwefeldioxyd erfolgen, wobei

(A) die nach der Abtrennung von Silberchlorid gewonnene Selen und Tellur enthaltende Lösung folgenden Schritten unterzogen wird:

(a) Denitrierung und Chlorierung der Selen und Tellur enthaltenden Lösung durch Flüssig/-Flüssig-Extraktion;
(b) Abtrennung von Tellur aus der denitrierten und chlorierten Lösung durch Flüssig/Flüssig-Extraktion;
(c) Ausfällung von Selen durch Zusatz von Schwefeldioxyd in die Selen enthaltende wässrige Lösung von Schritt (b) und
(d) Ausfällung von Tellur durch Zusatz von Schwefeldioxyd in die Tellur enthaltende Abstreiflösung von Schritt (b); und

(B) der von der Salpetersäureauslaugung des Anodenschlamms anfallende Rückstand folgenden Schritten unterzogen wird:

(e) Auslaugung des vorgenannten Rückstands mittels Königswasser;
(f) Abtrennung von Gold aus der Königswasserlaugenlösung durch Flüssig/Flüssig-Extraktion; und
(g) Reduktion von Gold von dem organischen Medium von Schritt (f) durch Hinzufügen einer entsprechenden Menge eines Reduktionsmittels.

2. Verfahren nach Anspruch 1, bei dem Schritt (a) mindestens sechs Extraktionsstufen und sechs Abstreifstufen und Schritt (b) mindestens 2 Extraktionsstufen, zwei Waschstufen und zwei Abstreifstufen umfassen.

3. Verfahren nach Anspruch 2, bei dem mindestens die ersten beiden Extraktionsstufen des Schrittes (a) zur Denitrierung und die übrigen Schritte zur gleichzeitigen Denitrierung un Chlorierung dienen.

4. Verfahren nach einem der Ansprüche 1—3, bei dem Schritt (f) mindestens ein Extraktionsstufe und zwei Waschstufen umfaßt.

5. Verfahren nach Anspruch 4, bei dem die Waschlösung mindestens 3M Salzsäure ist.